# EUROPÄISCHE PATENTSCHRIFT

(11) **EP 4 182 176 B1**
(45) Veröffentlichungstag und Bekanntmachung des Hinweises auf die Patenterteilung: **04.09.2024**
(21) Anmeldenummer: 21733771.6
(22) Anmeldetag: 15.06.2021
(51) Int. Cl.: B60H 1/00, B60H 3/00

(54) **VORRICHTUNG ZUR LUFTREINIGUNG**
DEVICE FOR AIR PURIFICATION
DISPOSITIF DE PURIFICATION D'AIR

(30) Priorität: 14.07.2020 DE 102020118534
(43) Veröffentlichungstag der Anmeldung: 24.05.2023
(73) Patentinhaber: MAN Truck & Bus SE, 80995 München (DE)
(72) Erfinder: ROGIER, Joachim, 80995 München (DE)
(74) Vertreter: v. Bezold & Partner Patentanwälte - PartG mbB
(86) Internationale Anmeldenummer: PCT/EP2021/066029
(87) Internationale Veröffentlichungsnummer: WO 2022/012831

(56) Entgegenhaltungen:
- EP-A2- 3 284 621
- WO-A1-2017/162577
- WO-A1-2018/224299
- DE-A1- 102013 221 366
- DE-U1- 20 122 583
- FR-A1- 2 955 031
- KR-A- 20180 120 901
- US-A1- 2003 129 936

## Beschreibung

Die Erfindung betrifft eine Vorrichtung zur Luftreinigung für ein Personenbeförderungsmittel.

In räumlich begrenzten Umgebungen (z. B. in Arbeitsräumen, Fahrzeugen, Fahrstühlen) kann von mit Krankheitserregern infizierten Personen eine erhöhte Ansteckungsgefahr für die dort anwesenden anderen Personen ausgehen. Die Krankheitserreger können dabei von den infizierten anwesenden Personen selbst stammen oder sich auf diesen oder auf Kontaktoberflächen innerhalb der betreffenden Räume befinden.

Mit Keimen behaftete oder infizierte Personen können durch ihr Betreten der Innenräume von Fahrzeugen, Arbeitsräumen oder Fahrstühlen sowohl die Atemluft als auch die dort befindlichen Kontaktflächen mit Keimen (Viren, Bakterien) kontaminieren, was bei Vorhandensein von aggressiven Keimen für die übrigen im Raum befindlichen Personen ein erhebliches Gesundheitsrisiko darstellen kann. Die mit Keimen behafteten Personen können diese Keime unbewusst auf den Oberflächen von Haut, Haaren, Kleidung oder Gepäckstücken mit sich führen und in die Innenräume einbringen oder als bereits infizierte Personen die Raumluft über Aerosole kontaminieren, was das Gesundheitsrisiko für alle Insassen noch weiter erhöht.

Besonders innerhalb enger, geschlossener Räume von Fahrzeugen und Fahrstühlen besteht eine deutlich erhöhte Gefahr, dass die im Raum befindlichen Krankheitserreger auf die dort anwesenden Personen übertragen und von diesen aufgenommen und über die Atemwege eingeatmet werden. Im Falle aggressiver Krankheitserreger wie Viren, Bakterien, Pilze usw. kann dies zu unkalkulierbar hohen gesundheitlichen Risiken für die anwesenden Personen führen.

Die DE 11 2014 000 269 T5 offenbart eine Vorrichtung zum Reinigen von Luft unter Verwendung einer ultravioletten Leuchtdiode. Ein Gehäuse der Vorrichtung kann einem Gehäuse für mindestens eine Luftzuleitung und -ableitung für eine Armlehne in einem Fahrzeug, eine Klimaanlage oder eine Heizung entsprechen.

Die US 10,029,797 B2 offenbart eine personenbezogene Belüftung in einer Flugzeugumgebung. Das Belüftungssystem kann einen Einlass, eine Ultraviolettlichteinheit, ein Gebläse, Filter, ein Kanalsystem und Auslässe umfassen. Der Einlass, die Ultraviolettlichteinheit, das Gebläse, die Filter und das Kanalsystem können in einer Rückenlehne eines Passagiersitzes eingebaut sein. Die Auslässe können in einer Kopfstütze des Passagiersitzes eingebaut sein.

Die EP 3 284 621 A2 offenbart ein Belüftungssystem, das in einer ersten Ausführungsform ein Sensorelement zum Erkennen eines Ausatmens (eines oder mehrerer Fahrgäste) und Mittel zum Absaugen (Extrahieren) von Luft aus einem Inneren eines Fahrzeugs umfasst, wobei die Mittel zum Absaugen der Luft so konfiguriert sind, dass sie hauptsächlich einen Teil der von den Fahrgästen ausgeatmeten Luft entfernen. Bei einer zweiten Ausführungsform befinden sich die Luftauslässe des Belüftungssystems in einem Bereich, in dem sich der ausgeatmete Luftstrom ausbreitet, und die Richtung von Strömen aus Luftzuführungsmittel trägt zum Abzug der ausgeatmeten Luft bei. Zusätzlich kann ein solches System mit Sensoren für die Atmung ausgestattet werden, die es ermöglichen, die Luftmassen mit der maximalen Konzentration der Ausatmungsprodukte zu extrahieren.

Die US 2003/129936 A1 offenbart einen Raumlüfter zum Abführen von einem Raucher ausgeatmeten Rauchs aus einem Raum nach außen. Der Raumlüfter hat eine im Raum angeordnete Ansaugvorrichtung zum Ansaugen des vom Raucher ausgeatmeten Rauchs, eine Luftpumpe zum Erzeugen eines Luftstroms, um den Rauch in die Ansaugvorrichtung zu saugen und den Rauch nach außen abzuführen, einen Verbindungsschlauch zum Verbinden der Ansaugvorrichtung mit der Luftpumpe und einen Fensterauslasseinsteller zum Anbringen in einem Fenster, der den Durchgang eines Verbindungsschlauchs vom Raum zum Außenbereich ermöglicht. Der Fensterauslasseinsteller hat verstellbare Klappen, um eine Barriere zwischen dem Raum und dem Außenbereich zu bilden. Eine weitere Ausführungsform ist eine Belüftungseinheit mit einem ersten und einem zweiten Sensor zum Erfassen des Vorhandenseins von ersten bzw. zweiten Luftschadstoffen an einem Innenraum und zum Einschalten einer Luftpumpe, wenn mindestens einer der ersten und zweiten Luftschadstoffe erfasst wird, einer Ansaugvorrichtung zum Ansaugen der erfassten Luftschadstoffe und einem Kanal, der die Ansaugvorrichtung mit dem Außenbereich verbindet, um die erfassten Luftschadstoffe abzuführen.

Die WO 2018/224299 A1 offenbart ein intelligentes, multimodales Fahrzeug-Luftfiltrationsmanagementsystem mit einem ersten Filterelement und einem zweiten Filterelement, welche in einem Frischluftgehäuse angeordnet sind, wobei das Frischluftgehäuse einen Einlass und einen Auslass aufweist. Zusätzlich ist ein drittes Filterelement vorgesehen, das in einem Kabinengehäuse angeordnet ist, wobei das Kabinengehäuse einen oder mehrere Einlässe aufweist. Ein Fluidkanal ist zwischen dem Frischluft- und dem Kabinengehäuse angeordnet. Schließlich ist eine Umlenkeinrichtung vorgesehen, die in der Nähe eines Auslasses des Frischluftgehäuses angeordnet ist, wobei die Umlenkeinrichtung so konfiguriert ist, dass sie bewirkt, dass die Luft durch das Frischluftgehäuse selektiv durch das erste Filterelement oder das zweite Filterelement oder durch beide strömt.

Die DE 10 2013 221 366 A1 offenbart ein Verfahren zur Steuerung einer Kraftfahrzeugklimaanlage unter Berücksichtigung möglicher Ablenkungszustände des Fahrzeugführers. Hierbei erfolgt während des Fahrbetriebs eine Überwachung des Zustandes des Fahrzeugführers anhand von Sensorsignalen, zumindest durch Auswertung eines durch eine Kamera wenigstens ausschnittsweise aufgenommenen Videobilds des Fahrzeugführers und/oder durch Auswertung eines mittels eines Mikrofons im Bereich des Fahrzeugführers aufgenommen akustischen Signals, und eine Erkennung eines sich anbahnenden Niesvorganges des Fahrzeugführers anhand der Überwachung. Bei Erkennung eines Niesvorganges wird eine Fahrzeugklimaanlage in einen geeigneten Modus geschaltet, mit dem die ausgeatmete Luft im Bereich der niesenden Person besonders gereinigt wird, und/oder dass eine luftreinigende oder desinfizierende Substanz in die aus einem Luftauslass in der Umgebung der niesenden Person strömende Luft eingeleitet wird, und/oder dass eine intensivere Filterung der in die Fahrgastzelle einströmenden Luft von Pollen, Feinstaub od. dgl. bewirkt wird.

Der Erfindung liegt die Aufgabe zu Grunde, eine alternative und/oder verbesserte Vorrichtung zur Luftreinigung für Fahrzeuge und Personenaufzüge zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft eine Vorrichtung zur Luftreinigung für ein (z. B. Massen-) Personenbeförderungsmittel (z. B. Fahrzeug oder Personenaufzug). Die Vorrichtung weist eine Erfassungseinrichtung auf, die dazu ausgebildet ist, eine Anwesenheit und/oder einen Gesundheitszustand (z. B. Krankheitssymptome) einer Person in einem Personenaufenthaltsbereich (z. B. Stehbereich, Sitzbereich oder Liegebereich) zu erfassen. Die Vorrichtung weist einen Luftabsaugkanal mit einem Einlass, der zum Absaugen von ausgeatmeter Luft aus einer Atemzone des Personenaufenthaltsbereichs anordenbar oder angeordnet ist, einer Fördereinrichtung zum Fördern der Luft durch den Luftabsaugkanal und einer Reinigungseinrichtung (z. B. Sterilisierungseinrichtung) zum Inaktivieren von Krankheitserregern in der durch den Luftabsaugkanal geförderten Luft auf. Die Vorrichtung weist eine Steuereinheit auf, die dazu ausgebildet ist, die Fördereinrichtung und/oder die Reinigungseinrichtung in Abhängigkeit von einer Erfassung (z. B. einer Anwesenheit einer Person und/oder einem Gesundheitszustand einer Person) der Erfassungseinrichtung zu betreiben (z. B. Anschalten, Ausschalten und/oder Auswahl einer gewünschten Leistungsstufe von mehreren verfügbaren Leistungsstufen).

Vorteilhaft ermöglicht die Vorrichtung ein Ansteckungsrisiko zwischen Personen dadurch zu verringern, dass von einer erkrankten Person ausgeatmete Krankheitserreger direkt von der Atemzone der erkrankten Person abgesaugt und inaktiviert werden. Das Ansteckungsrisiko durch Tröpfcheninfektion oder Aerosole von sich in der Nähe aufhaltende Personen kann somit verringert werden. Die Vorrichtung kann besonders energiesparend implementiert werden, wenn die Fördereinrichtung nur aktiviert wird, wenn die Anwesenheit einer (gesunden oder kranken) Person erkannt wird. Die Vorrichtung kann ihren Betrieb auch an einen erfassten Gesundheitszustand der Person im Personenaufenthaltsbereich anpassen, sodass beispielsweise bei gesunden oder symptomfreien Personen nur gering (oder auch gar nicht) Luft aus der Atemzone abgesaugt wird und bei Personen mit Krankheitssymptomen (z. B. erhöhte Körpertemperatur, Husten, Schnupfen usw.) viel Luft aus der Atemzone abgesaugt wird. Besonders bevorzugt kann die Vorrichtung in Personenbeförderungsmitteln eingesetzt werden, in denen aufgrund einer hohen Frequenz an zu- und austeigenden Personen einerseits ein erhöhtes Ansteckungsrisiko existiert und andererseits nur schwer eine Zulassungsbeschränkung für (bewusst oder unbewusst) Erkrankte realisierbar ist.

Erfindungsgemäß ist die Erfassungseinrichtung dazu ausgebildet, eine Körpertemperatur der Person in dem Personenaufenthaltsbereich zu erfassen, vorzugsweise mittels einer Wärmebildkamera und/oder einem berührungslosen Fieberthermometer. Beispielsweise kann anhand der erfassten Körpertemperatur auf einen Gesundheitszustand und/oder eine Anwesenheit einer Person im Personenaufenthaltsbereich geschlossen werden.

Erfindungsgemäß ist die Steuereinheit dazu ausgebildet, eine Förderleistung der Fördereinrichtung und/oder eine Reinigungsleistung der Reinigungseinrichtung zu erhöhen, wenn von der Erfassungseinrichtung eine erhöhte Körpertemperatur, vorzugsweise ab rund 37,5 °C, oder Fieber, vorzugsweise ab rund 38,5 °C, erfasst wird. Vorteilhaft kann somit die mit Krankheitserregern versetzte ausgeatmete Luft von bewusst oder unbewusst kranken Menschen besonders wirkungsvoll abgesaugt und behandelt werden, um ein Ansteckungsrisiko für andere Personen zu verringern.

In einer Ausführungsform ist die Erfassungseinrichtung dazu ausgebildet, eine Schallemission der Person in dem Personenaufenthaltsbereich zu erfassen, vorzugsweise mittels eines Mikrofons. Beispielsweise kann anhand von erfassten Schallemissionen auf einen Gesundheitszustand und/oder eine Anwesenheit einer Person im Personenaufenthaltsbereich geschlossen werden.

In einer weiteren Ausführungsform ist die Steuereinheit dazu ausgebildet, eine Förderleistung der Fördereinrichtung und/oder eine Reinigungsleistung der Reinigungseinrichtung zu erhöhen, wenn ein Husten, ein Schiefen und/oder ein Ächzen der Person mittels der Erfassungseinrichtung erfasst wird. Vorteilhaft kann somit die mit Krankheitserregern versetzte ausgeatmete Luft von bewusst oder unbewusst kranken Menschen besonders wirkungsvoll abgesaugt und behandelt werden, um ein Ansteckungsrisiko für andere Personen zu verringern.

In einer Ausführungsvariante ist die Steuereinheit dazu ausgebildet, die Fördereinrichtung und/oder die Reinigungseinrichtung zu aktivieren, wenn die Erfassungseinrichtung die Anwesenheit der Person erfasst. Vorteilhaft kann so eine automatische Einschaltung der Luftabsaugung und Reinigung erreicht werden, um z. B. einerseits Energie zu sparen, wenn keine Person anwesend ist, und andererseits die Absaugung und ggf. Reinigung von Atemluft bei Anwesenheit einer Person immer zwangsläufig zu aktivieren.

In einer weiteren Ausführungsvariante ist die Steuereinheit dazu ausgebildet, eine Förderleistung der Fördereinrichtung und/oder eine Reinigungsleistung der Reinigungseinrichtung temporär zu erhöhen, wenn die Erfassungseinrichtung ein Verlassen des Personenaufenthaltsbereichs durch die Person erfasst. Vorteilhaft kann so die Luft im gesamten Personenaufenthaltsbereich nach dem Verlassen der Person automatisch abgesaugt und gereinigt werden.

In vorteilhafter Weise kann die Steuereinheit dazu ausgebildet sein, eine zusätzliche Absaugung über mindestens ein im Bodenbereich des Personenaufenthaltsbereichs angeordnetes Absaugelement zu aktivieren, wenn die Erfassungseinrichtung ein Verlassen des Personenaufenthaltsbereichs durch die Person erfasst. Die beim Verlassen des Personenaufenthaltsbereichs durch die Person gesteigerte Leistung der Absaugung und Reinigung der Luft kann so auch auf das im Bodenbereich des Personenaufenthaltsbereichs angeordnet Absaugelemente erstreckt werden. Dieses Absaugelement kann beispielsweise mit dem Luftabsaugkanal in Verbindung stehen. Dies kann insofern vorteilhaft sein, da sich Keime bevorzugt auch im Bodenbereich ansammeln können. Nach dem Verlassen einer/aller Person(en) kann somit eine Grundreinigung eines/aller Personenaufenthaltsbereich(e) erzielt werden.

Vorzugsweise kann die Steuereinheit dazu ausgebildet sein, anschließend an die temporäre Erhöhung die Fördereinrichtung und/oder die Reinigungseinrichtung zu deaktivieren, z. B. wenn keine Anwesenheit einer weiteren Person im Personenaufenthaltsbereich erfasst wird.

In einem Ausführungsbeispiel weist die Vorrichtung ferner eine (z. B. zentrale oder dem Personenaufenthaltsbereich zugeordnete oder zuordenbare) Benutzerschnittstelle auf, z. B. zum Eingeben und/oder Ausgeben von Informationen.

In einem weiteren Ausführungsbeispiel ist mittels der Benutzerschnittstelle eine Förderleistung der Fördereinrichtung und/oder eine Reinigungsleistung der Reinigungseinrichtung auf unterschiedliche Leistungsstufen anpassbar. Vorteilhaft kann so beispielsweise eine sich plötzlich krank fühlende oder einen Hustenreiz verspürende Person im Personenaufenthaltsbereich selbst die Luftabsaugung aus der Atemzone erhöhen, um Personen in der Nähe vor Krankheitserregern zu schützen.

In einem weiteren Ausführungsbeispiel ist mittels der Benutzerschnittstelle eine Information bezüglich des erfassten Gesundheitszustands (z. B. visuell oder akustisch) ausgebbar. Vorteilhaft können so beispielsweise auch unbewusste kranke Personen (z. B. mit erhöhter Körpertemperatur) auf ihre Krankheitssymptome hingewiesen werden.

In einer Ausführungsform ist der Einlass bewegbar angebracht. Alternativ oder zusätzlich kann der Einlass bspw. an einem biegsamen (z. B. Rohr-) Abschnitt, vorzugsweise Schwanenhals oder Flexarm, des Luftabsaugkanals angeordnet sein. Alternativ oder zusätzlich kann der Einlass bspw. eine Trichterform aufweisen. Alternativ oder zusätzlich kann der Einlass bspw. an einer Decke, einer Wand, einem Tisch, einem Regal, einem Schrank, einer Konsole, einem Sitz (z. B. Rückenlehne oder Kopfstütze) oder einem Armaturenbrett angeordnet sein.

Bevorzugt ist der Einlass nicht als eine am Kopf oder Gesicht zu tragende bzw. anliegende Atemmaske ausgeführt. Stattdessen ist der Einlass vorzugsweise dazu ausgebildet, beabstandet bzw. berührungslos zum Gesicht / Kopf der Person positioniert zu werden, um Luft aus der Atemzone abzusaugen.

Dies ist insbesondere vorteilhaft für Personen, die aus medizinischen Gründen keinen Mund-Nasen-Schutz tragen können (bspw. Unverträglichkeit, vermehrte Kohlendioxid-Rückeinatmung verbunden mit signifikantem Anstieg der CO2-Werte im Blut). Auch bei Verwendung eines Mund-Nasen-Schutzes kann dessen Wirksamkeit nicht zuverlässig garantiert werden, da in der täglichen Praxis weder die Qualität noch der Gebrauchszustand oder der zuverlässige Sitz des Mund-Nasen-Schutzes fehlerfrei sichergestellt werden kann.

In einer weiteren Ausführungsform weist der Luftabsaugkanal ferner einen Auslass zum Ausgeben der geförderten Luft in eine Außenumgebung auf. Alternativ kann der Auslass bspw. auch in den Personenaufenthaltsbereich oder einen anderen Bereich eines Innenraums, z. B. des Personenbeförderungsmittels, münden.

Vorzugsweise kann der Auslass stromabwärts der Fördereinrichtung und/oder stromabwärts der Reinigungseinrichtung angeordnet sein.

In einer Ausführungsvariante ist die Fördereinrichtung mittels einer Druckluftanlage angetrieben, vorzugsweise nach dem Venturi-Prinzip. Damit kann bspw. ein energiesparender und/oder geräuscharmer Betrieb der Fördereinrichtung ermöglicht werden, bevorzugt mittels der bei Massenpersonenbeförderungsmitteln (z. B. Omnibus) ohnehin vorhandenen Druckluftanlage.

Alternativ oder zusätzlich kann die Fördereinrichtung beispielsweise einen Lüfter (z. B. Axiallüfter oder Radiallüfter) aufweisen.

In einer weiteren Ausführungsvariante weist die Reinigungseinrichtung eine UV-Behandlungseinrichtung zum Bestrahlen der geförderten Luft und/oder eine Heizeinrichtung zum Aufheizen der geförderten Luft, vorzugsweise auf mindestens 70°C, auf. Als UV-Behandlungseinrichtungen können hierfür vorzugsweise UV-Strahler, bspw. UV-C-Strahler, UV-Lampen, spezielle Röhren oder Laser zum Einsatz kommen. Dabei ist die Strahlungsleistung der UV-Behandlungseinrichtung sowie die Dauer ihrer Einwirkzeit auf die kontaminierte Abluft auf die zuverlässige Abtötung der Keime hin abzustimmen.

Es ist möglich, dass die UV-Behandlungseinrichtung und/oder die Heizeinrichtung in unterschiedlichen Leistungsstufen betreibbar ist, z. B. durch Zu- oder Abschalten von Segmenten und/oder Erhöhen oder Absenken einer Energieversorgung (z. B. Stromversorgung).

In einem Ausführungsbeispiel weist die Vorrichtung ferner eine (z. B. zentrale) Luftzuführung auf, die zum Zuführen von Luft aus einer Außenumgebung in den Personenaufenthaltsbereich anordenbar oder angeordnet ist, wobei die Luftzuführung eine weitere Fördereinrichtung zum Fördern von Luft aufweist. Bevorzugt kann die Steuereinheit dazu ausgebildet sein, einen Betrieb der weiteren Fördereinrichtung an einen Betrieb der Fördereinrichtung anzupassen, vorzugsweise miteinander zu synchronisieren. Vorteilhaft kann so bspw. automatisch ein mengenmäßiger Ausgleich zwischen zugeführter und abgesaugter Luft erreicht werden.

Bevorzugt kann mindestens ein Auslass der Luftzuführung entfernt von dem Einlass des Luftansaugkanals und/oder außerhalb der Atemzone des Personenaufenthaltsbereichs angeordnet sein.

In einem weiteren Ausführungsbeispiel weist die Luftzuführung ferner eine weitere Reinigungseinrichtung (z. B. Sterilisierungseinrichtung) zum Inaktivieren von Krankheitserregern in der durch die weitere Fördereinrichtung geförderten Luft, vorzugsweise mittels einer UV-Behandlungseinrichtung zum Bestrahlen der geförderten Luft und/oder einer Heizeinrichtung zum Aufheizen der geförderten Luft, besonders bevorzugt auf mindestens 70°, auf.

Ein weiterer Aspekt der vorliegenden Offenbarung betrifft ein (z. B. Massen-) Personenbeförderungsmittel, vorzugsweise Fahrzeug, z. B. Kraftfahrzeug, Schienenfahrzeug, Luftfahrzeug oder Wasserfahrzeug, oder Personenaufzug. Das Personenbeförderungsmittel weist mindestens einen Personenaufenthaltsbereich und mindestens eine Vorrichtung wie hierin offenbart, die dem mindestens einen Personenaufenthaltsbereich zugeordnet ist, auf.

Vorzugweise können mehrere Personenaufenthaltsbereiche und mehrere Vorrichtungen zur Luftreinigung umfasst sein, wobei jeweils mindestens eine der mehreren Vorrichtungen je einem der mehreren Personenaufenthaltsbereiche zugeordnet ist. Bevorzugt kann die Luftzuführung eine zentrale Luftzuführung sein, die den mehreren Personenaufenthaltsbereichen zugeordnet ist.

Vorzugsweise kann sich der Begriff "Steuereinheit" auf eine Elektronik (z. B. mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung eines Personenaufenthaltsbereichs und einer Vorrichtung zur Luftreinigung;
- Figur 2: eine schematische Darstellung einer Vorrichtung zur Luftreinigung in einem Fahrzeug; und
- Figur 3: eine schematische Darstellung eines flexiblen Einlasses einer Vorrichtung zur Luftreinigung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

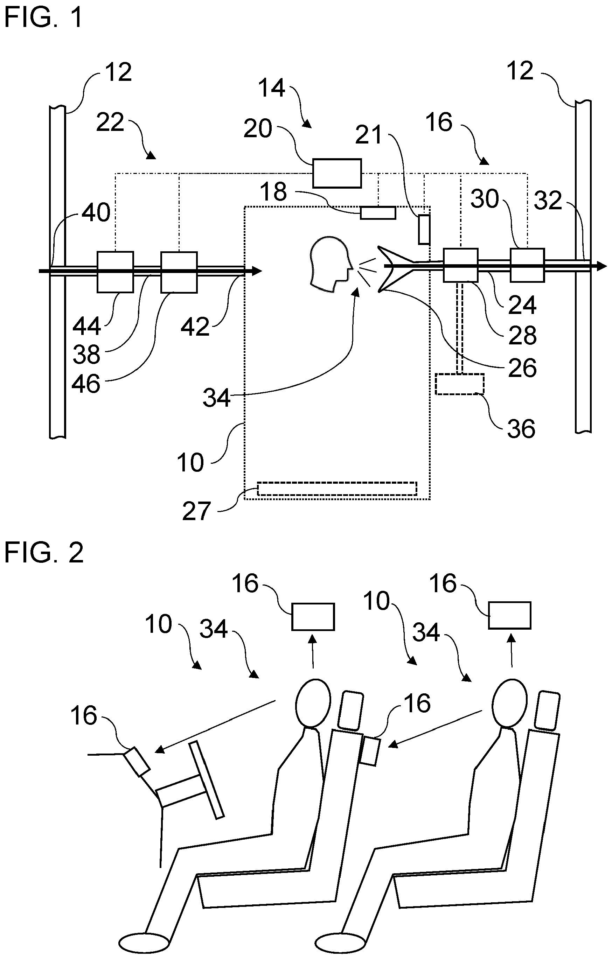

Die Figur 1 zeigt einen Personenaufenthaltsbereich 10. Der Personenaufenthaltsbereich 10 ist vorzugsweise in einem Fahrzeug (z. B. Kraftfahrzeug, Schienenfahrzeug, Luftfahrzeug oder Wasserfahrzeug) zur Personenbeförderung angeordnet, besonders bevorzugt in einem Omnibus, einem Passagierzug, einem Passagierflugzeug oder einer Passagierfähre. Alternativ kann der Personenaufenthaltsbereich 10 beispielsweise auch in einem Personenaufzug oder einem Gebäude (z. B. Büroraum) angeordnet sein. Prinzipiell kann der Personenaufenthaltsbereich 10 in allen beengten Räumlichkeiten, insbesondere mit Öffentlichkeitscharakter, vorgesehen sein, bspw. in allen Beförderungsmitteln (Pkw, Lkw, Bus, Bahn, Flugzeug, Schiff, Aufzug) oder in Arbeitsräumen (Büro).

Der Personenaufenthaltsbereich 10 kann beispielsweise ein Stehplatz, ein Sitzplatz oder ein Liegeplatz sein. Vorzugsweise sind mehrere nebeneinander angeordnete Personenaufenthaltsbereiche 10 vorhanden, z. B. mehrere Steh- und/oder Sitzplätze in einem Fahrzeug oder mehrere Stehplätze in einem Personenaufzug.

Der Personenaufenthaltsbereich 10 ist durch Außenwände 12 von einer Außenumgebung oder Umwelt getrennt. Die Außenwände 12 können beispielsweise Teile einer Fahrzeugkarosserie oder Kabinenwände eines Personenaufzugs sein.

Dem Personenaufenthaltsbereich 10 ist eine Vorrichtung 14 zur Luftreinigung zugeordnet. Sofern mehrere Personenaufenthaltsbereiche 10 vorgesehen sind, ist bevorzugt für jeden der mehreren Personenaufenthaltsbereiche 10 mindestens eine eigene Vorrichtung 14 vorgesehen.

Die Vorrichtung 14 weist eine (Innen-)Luftabsaugung 16, eine Erfassungseinrichtung 18, eine Steuereinheit 20 und optional eine Benutzerschnittstelle 21 und eine (Außen-)Luftzuführung 22 auf.

Die Luftabsaugung 16 weist einen Luftabsaugkanal 24 mit einem Einlass 26, einer Fördereinrichtung 28, einer Reinigungseinrichtung 30 und einem Auslass 32 auf. Mittels der Luftabsaugung 16 kann von einer Person im Personenaufenthaltsbereich 10 ausgeatmete Atemluft abgesaugt werden. Der Luftabsaugkanal 24 erstreckt sich zwischen dem Einlass 26 und dem Auslass 32.

Der Einlass 26 ist zum Absaugen von ausgeatmeter Luft aus einer Atemzone 34 des Personenaufenthaltsbereichs 10 angeordnet. Der Einlass 26 kann so angeordnet sein, dass er in Gesichtsnähe (= Atemzone 34) oder zumindest Kopfnähe (= Atemzone 34) beabstandet zu einer durchschnittlich großen (z. B. 160 cm bis 180 cm), erwachsenen Person im Personenaufenthaltsbereich 10 angeordnet ist, wobei die Person stehen, sitzen oder liegen kann.

Der Einlass 26 kann beispielsweise an einem Armaturenbrett, einem Sitz (z. B. Kopfstütze oder Rückenlehne), einer Decke, einem Tisch (z. B. Schreibtisch oder Esstisch), einem Regal, einem Schrank oder einer Wand angeordnet sein. Der Einlass 26 kann starr oder verstellbar/bewegbar angebracht sein. Der Einlass 26 kann auch beispielsweise an bestehenden Konsolen, Fahrzeugsitzen, Wandungen, Tischen, Regalen, Decken usw. nachgerüstet werden.

Der Einlass 26 kann eine Trichterform aufweisen. Der Einlass 26 kann bevorzugt als eine trichterförmige Auffangschüssel ausgeführt sein, die am Schüssel- bzw. Muldengrund eine Öffnung zum Luftabsaugkanal 24 aufweist. Durch die Gesichts- bzw. Kopfnähe des Einlasses 26 kann eine bspw. kontinuierlich stattfindende Absaugung der ausgeschiedenen, potentiell krankheitserregende Aerosole beinhaltenden Atemluft der Person im Personenaufenthaltsbereich 10 ermöglicht werden. Der umgebenden Raumluft kann somit ein Höchstmaß an krankheitserregenden Keimen entzogen werden.

Der Einlass 26 kann alternativ nach Art eines Stausauger-Aufsatzes mit flexiblem Anschlussrohr ausgestaltet und bedarfsweise aus einer Halterung entnehmbar sein. Somit kann der Einlass 26 von der jeweiligen Person selbständig zu bereichsnahen Kontaktflächen geführt und dort zu einer gewünschten Reinigung, unter Aktivierung der Luftabsaugung 16, herangezogen werden.

Die Fördereinrichtung 28 ist stromabwärts des Einlasses 26 angeordnet. Die Fördereinrichtung 28 saugt ausgeatmete Atemluft von der Person im Personenaufenthaltsbereich 10 über den Einlass 26 an. Von der Fördereinrichtung 28 angesaugte Luft wird durch den Luftabsaugkanal 24 bis zum Auslass 32 gefördert.

Die Fördereinrichtung 28 kann beispielsweise ein Lüfter, z. B. Axiallüfter oder Radiallüfter, sein. Eine Förderleistung der Fördereinrichtung 28 ist bevorzugt einstellbar, z. B. mittels Anpassen einer Drehzahl der Fördereinrichtung 28.

Es ist allerdings auch möglich, dass die Fördereinrichtung 28 von einer separaten Druckluftanlage 36, z. B. des Personenbeförderungsmittels, angetrieben wird. Beispielsweise kann die Luftansaugung durch einen mittels Venturi-Prinzip erzeugten Unterdruck im Luftabsaugkanal 24 erreicht werden. Von der Druckluftanlage bereitgestellte Druckluft durchströmt einen Kanal mit einer Einschnürung bzw. Querschnittsverengung. Ein stromaufwärtsseitiger Abschnitt des Luftabsaugkanals 24 mündet radial in die Einschnürung. Eine Stärke der Luftansaugung kann durch mengenmäßiges Anpassen der bereitgestellten Druckluft von der Druckluftanlage 36 angepasst werden, z. B. mittels entsprechender Ventileinstellung.

Die Fördereinrichtung 28 kann im Zusammenwirken mit dem Einlass 26 einen Unterdruckbereich in der Atemzone 34 erzeugen. Die ggf. mit Krankheitserregern kontaminierte ausgeatmete Atemluft kann gezielt aus der Atemzone 34 durch Absaugung entfernt werden. Infolge der Ansaugung können trockene oder leicht feuchte Aerosole sowie Feinstaub gezielt von den Passagieren und/oder ihrer unmittelbaren Umgebung abgesaugt werden, ohne dass es zum unkontrollierten Verblasen und Verteilen der Krankheitserreger im Personenaufenthaltsbereich 10 und insbesondere zu benachbarten Personenaufenthaltsbereichen 10 kommen kann.

Die Reinigungseinrichtung 30 ist stromabwärts des Einlasses 26 angeordnet. Die Reinigungseinrichtung 30 kann stromaufwärts oder stromabwärts der Fördereinrichtung 28 angeordnet sein. Die Reinigungseinrichtung 30 reinigt die im Luftabsaugkanal 24 geförderte Luft von Krankheitserregern (z. B. Viren, Bakterien, Pilze usw.) durch Inaktivieren der Krankheitserreger. Insbesondere kann die Reinigungseinrichtung 30 die geförderte Luft sterilisieren. Die Reinigungseinrichtung 30 kann eine anpassbare Reinigungsleistung (z. B. Bestrahlungsintensität und/oder Heizleistung) aufweisen.

Die Reinigungseinrichtung 30 kann eine UV- Behandlungseinrichtung (Ultraviolettes-Licht-Behandlungseinrichtung) zum Bestrahlen der im Luftabsaugkanal 24 geförderten Luft aufweisen. Bevorzugt weist die UV-Behandlungseinrichtung eine einstellbare Bestrahlungsintensität auf, z. B. durch Vorsehen mehrerer einzeln oder in Gruppen aktivierbarer UV-Lampen (z. B. UV-Dioden).

Die Reinigungseinrichtung 30 kann eine Heizeinrichtung zum Aufheizen der im Luftabsaugkanal 24 geförderten Luft aufweisen. Bevorzugt weist die Heizeinrichtung eine einstellbare Heizleistung auf. Die Heizeinrichtung kann beispielsweise eine elektrische Heizeinrichtung sein. Es ist allerdings auch möglich, dass die Heizeinrichtung als ein Wärmetauscher in einem Abwärmenutzungskreislauf (z. B. Motorkühlsystem, Abgaswärmetauscher) des Beförderungsmittels eingebunden ist. Die Heizeinrichtung kann die geförderte Atemluft bevorzugt über 70°C erhitzen, um ein Abtöten der Krankheitserreger sicherstellen zu können.

Um ein zuverlässiges Abtöten und Neutralisieren der Krankheitserreger sicherzustellen, ist eine Reinigungseinrichtung 30 mit sowohl UV-Behandlungseinrichtung als auch Heizeinrichtung zu bevorzugen.

Es ist auch möglich, dass die Reinigungseinrichtung 30 mindestens eine zusätzliche Reinigungskomponente, beispielsweise einen Filter (z. B. HEPA-Filter), aufweist. In vorteilhafter Weise kann ein hitzebeständiger, regenerativer Filter für die kontinuierliche Abscheidung der Keime vorgesehen sein, welcher der Hitzeeinwirkung durch die Heizeinrichtung und/oder der Einwirkung durch die UV-Behandlungseinrichtung standhalten kann. Der Filter kann aus faserbeschichtetem Material (bspw. Silberfaser oder Kupferfaser) bestehen und für den Dauereinsatz vorgesehen sein. Im Falle eines gegebenenfalls notwendigen Filterwechsels kann durch die keimtötende Wirkung des genannten Fasermaterials eine mögliche Gesundheitsgefährdung für die ausführende Person und der Umwelt wirksam vermieden werden. Es ist auch möglich, dass der Filter zumindest teilweise regenerierbar ist, z. B. durch eine temporäre Erhöhung einer Temperatur der geförderten Luft mittels der Heizeinrichtung.

Durch den Auslass 32 kann die abgesaugte und gezielt dekontaminierte Luft ohne Gesundheitsrisiko abgegeben werden. Der Auslass 32 mündet bevorzugt in die Außenumgebung oder Umwelt.

Es ist allerdings auch möglich, dass der Auslass 32 in den Personenaufenthaltsbereich 10 oder einen benachbarten Personenaufenthaltsbereich 10 mündet, jedoch nicht ohne zuvor diese Luft mittels der Reinigungseinrichtung 30 von Keimen zu reinigen.

Sofern der Auslass 32 in den Personenaufenthaltsbereich 10 mündet und die Reinigungseinrichtung 30 eine Heizeinrichtung aufweist, kann es notwendig sein, die aufgeheizte Luft vor dem Einblasen in den Personenaufenthaltsbereich 10 auf eine gewünschte oder einatmungsfähige Temperatur abzukühlen, z. B. mit einem Luftkühler oder einer Abkühlstrecke.

Die Erfassungseinrichtung 18 kann eine Anwesenheit und/oder einen Gesundheitszustand einer Person in dem Personenaufenthaltsbereich 10 erfassen.

Zum Erfassen der Anwesenheit der Person kann die Erfassungseinrichtung 18 beispielsweise eine Lichtschranke, einen (z. B. Druck-) Sensor im Boden oder Sitz oder eine Kameravorrichtung aufweisen.

Zum Erfassen eines Gesundheitszustands (und/oder einer Anwesenheit) der Person kann die Erfassungseinrichtung 18 erfindungsgemäß eine Körpertemperatur und optional zusätzlich Schallemissionen der Person erfassen. Zum Erfassen der Körpertemperatur kann die Erfassungseinrichtung 18 ein berührungsloses Fieberthermometer oder eine Wärmebildkamera aufweisen. Zum Erfassen der Schallemissionen kann die Erfassungseinrichtung 18 ein Mikrofon aufweisen.

Die Steuereinheit 20 steht in Kommunikationsverbindung mit der Erfassungseinrichtung 18. Die Steuereinheit 20 kann ferner in Kommunikationsverbindung mit der Benutzerschnittstelle 21, der Fördereinrichtung 28 und/oder Reinigungseinrichtung 30 zum Empfangen und/oder Ausgeben von Information stehen.

Basierend auf von der Erfassungseinrichtung 18 empfangenen Signalen kann die Steuereinheit 20 die Fördereinrichtung 28 und/oder die Reinigungseinrichtung 30 betreiben, z. B. aktivieren, deaktivieren, Leistung steigern oder Leistung verringern.

Beispielsweise kann die Steuereinheit 20 die Fördereinrichtung 28 und/oder die Reinigungseinrichtung 30 aktivieren bzw. einschalten, wenn die Anwesenheit der Person im Personenaufenthaltsbereich 10 erkannt wird.

Die Steuereinheit 20 kann eine Förderleistung (z. B. Drehzahl) der Fördereinrichtung 28 und/oder eine Reinigungsleistung (z. B. Bestrahlungsintensität und/oder Heizleistung) der Reinigungseinrichtung 30 temporär erhöhen, wenn erkannt wird, dass die Person den Personenaufenthaltsbereich 10 verlässt. Anschließend an die temporäre Erhöhung der Förderleistung und/oder Reinigungsleistung kann die Steuereinheit 20 die Fördereinrichtung 28 und/oder die Reinigungseinrichtung 30 deaktivieren bzw. ausschalten.

Es ist auch zusätzlich möglich, dass die Steuereinheit 20 optional mindestens ein Absaugelement 27 im Bodenbereich des Personenaufenthaltsbereichs 10 aktiviert, wenn erkannt wird, dass die Person den Personenaufenthaltsbereich 10 verlässt. Damit kann vorteilhaft eine Grundreinigung des Personenaufenthaltsbereichs 10 erreicht werden. Die Absaugelemente 27 sind bevorzugt mit dem Luftabsaugkanal 24 verbunden, vorzugsweise stromauf der Fördereinrichtung 28 und der Reinigungseinrichtung 30.

Die Steuereinheit 20 kann eine Förderleistung (z. B. Drehzahl) der Fördereinrichtung 28 und/oder eine Reinigungsleistung (z. B. Bestrahlungsintensität und/oder Heizleistung) der Reinigungseinrichtung 30 erhöhen, wenn von der Erfassungseinrichtung 18 ein schlechter Gesundheitszustand der Person im Personenaufenthaltsbereich 10 erfasst wird. Beispielsweise könnte von der Erfassungseinrichtung 18 eine erhöhte Körpertemperatur (z. B. ab 37,5 °C) oder Fieber (z. B. ab 38,5 °C) der Person im Personenaufenthaltsbereich 10 erfasst werden. Es könnte auch ein Husten, Schniefen oder Ächzen der Person im Personenaufenthaltsbereich 10 von der Erfassungseinrichtung 18 erfasst werden, was auf einen schlechten Gesundheitszustand der Person hindeuten kann.

Die Steuereinheit 20 kann einen Betrieb der Fördereinrichtung 28 und/oder der Reinigungseinrichtung 30 auch an eine Atemcharakteristik der Person im Personenaufenthaltsraum 10 anpassen, wenn gewünscht. Beispielsweise kann mittels der Erfassungseinrichtung 18 die Atemcharakteristik (z. B. Atemfrequenz, Atemtiefe usw.) der Person im Personenaufenthaltsbereich 10 erfasst werden, z. B. mittels Kamera oder Mikrofon. Die Fördereinrichtung 28 und/oder die Reinigungseinrichtung 30 können bspw. an die Atemfrequenz und/oder die Atemtiefe angepasst betrieben werden, vorzugsweise in einem intermittierenden, periodischen und/oder pulsierenden Betrieb. Beispielsweise kann so erreicht werden, dass nur dann Luft abgesaugt wird oder mehr Luft abgesaugt wird, wenn die Person ausatmet. Auch kann die abgesaugte Menge an eine ausgeatmete Luftmenge bzw. Atemtiefe der Person im Personenaufenthaltsbereich 10 angepasst werden, sodass beispielsweise mit zunehmender Atemmenge bzw. Atemtiefe eine Förderleistung der Fördereinrichtung 28 und/oder eine Reinigungsleistung der Reinigungseinrichtung 30 erhöht wird.

Es ist möglich, dass die Steuereinheit 20 eine Auswertelogik (z. B. Algorithmen usw.) aufweist, um die von der Erfassungseinrichtung 18 empfangen Signale auswerten zu können. Beispielsweise kann die Auswertelogik dazu konfiguriert sein, mittels Bilderkennung in einer Aufnahme der Erfassungseinrichtung die Person zu erkennen oder eine erhöhte Temperatur der Person in einer Aufnahme einer Wärmebildkamera zu erkennen. Die Auswertelogik kann auch dazu konfiguriert sein, in von der Erfassungseinrichtung 18 erfassten Audioinformationen ein Husten, Schniefen oder Ächzen einer Person zu erkennen, z. B. mittels Vergleich mit vorbestimmen Audiomustern.

Mittels der Benutzerschnittstelle 21 kann die Förderleistung der Fördereinrichtung 28 und/oder die Reinigungsleistung der Reinigungseinrichtung 30 ebenfalls in unterschiedlichen Leistungsstufen (z. B. schwach, mittel, stark) anpassbar sein. Zum Eingeben von Informationen kann die Benutzerschnittstelle 21 beispielsweise mindestens eine Eingabeeinrichtung (z. B. Knopf, Schalter, berührungsempfindliche Anzeige, Mikrofon usw.) aufweisen.

Mittels der Benutzerschnittstelle 21 kann auch eine Information bezüglich des mittels der Erfassungseinrichtung 18 erfassten Gesundheitszustands ausgegeben werden. Die Information kann beispielsweise visuell oder akustisch ausgegeben werden. Die Information kann an die Person im Personenaufenthaltsbereich 10 und/oder an andere Personen in benachbarten Personenaufenthaltsbereichen 10 ausgegeben werden, z. B. auch an eine Aufsichtsperson des Personenbeförderungsmittels. Zum Ausgeben von Informationen kann die Benutzerschnittstelle 21 beispielsweise mindestens eine Ausgabeeinrichtung (z. B. Anzeige, Lautsprecher usw.) aufweisen.

Die Benutzerschnittstelle 21 kann beispielsweise eine zentrale Benutzerschnittstelle, eine dem jeweiligen Personenaufenthaltsbereich 10 zugeordnete Benutzerschnittstelle oder eine mehreren Personenaufenthaltsbereichen 10 zugeordnete Benutzerschnittstelle sein.

Die Luftzuführung 22 weist einen Luftzuführkanal 38 mit einem Einlass 40, einem Auslass 42 und einer weiteren Fördereinrichtung 44 auf. Die Luftzuführung 22 kann Teil einer Klimaanlage sein. Die Luftzuführung 22 kann als zentrale Luftzuführung zur Zuführung von Luft zu mehreren Personenaufenthaltsbereichen 10 ausgeführt sein.

Mittels der Luftzuführung 22 kann eine generelle Versorgung der Personen mit Frischluft gewährleistet werden. Die Frischluft kann dem Innenraum beispielsweise kontinuierlich oder bedarfsweise über eine vorhandene Klimaanlage oder eine sonstigen Gebläseeinrichtung zugeführt werden. Es ist möglich, dass die Luftzuführung 22 die von der Außenumgebung angesaugte Luft zunächst durch einen optionalen Frischluftfilter leitet, um Bakterien, Pollen, Partikel (z. B. Feinstaub, Ruß) auszufiltern. Des Weiteren können über einen optionalen Adsorptionsfilter krebserregende Benzolverbindungen ausgefiltert werden.

Der Einlass 40 kann beispielsweise an der Außenwand 12 oder anderweitig angrenzend an den Außenbereich angeordnet sein. Der Auslass 42 kann in den Personenaufenthaltsbereich 10 münden, vorzugsweise an einer Position entfernt von dem Einlass 26, z. B. gegenüberliegend bezüglich des Personenaufenthaltsbereichs 10, oder der Atemzone 34. Der Luftzuführkanal 38 erstreckt sich zwischen dem Einlass 40 und dem Auslass 42.

Mittels der weiteren Fördereinrichtung 44 kann Luft von einer Außenumgebung durch den Luftzuführkanal 38 zu dem Personenaufenthaltsbereich 10 gefördert werden. Die weitere Fördereinrichtung 44 kann beispielsweise als Axial- oder Radiallüfter ausgeführt sein.

Die Steuereinheit 20 kann in Kommunikationsverbindung mit der weiteren Fördereinrichtung 44 stehen. Die Steuereinheit 20 kann einen Betrieb der weiteren Fördereinrichtung 44 an einen Betrieb der Fördereinrichtung 28 anpassen. Beispielsweise kann die Steuereinheit 20 die Betriebe der beiden Fördereinrichtungen 28, 44 zumindest zeitweise miteinander synchronisieren. Wird beispielsweise eine Förderleistung der Fördereinrichtung 28 aufgrund einer Information von der Benutzerschnittstelle 21 oder der Erfassungseinrichtung 18 erhöht, so kann eine Förderleistung der weiteren Fördereinrichtung 44 ebenfalls automatisch von der Steuereinheit 20 erhöht werden.

Das Zusammenwirken der Luftabsaugung 16 und der Luftzuführung 22 kann von der Steuereinheit 20 zur Erzielung eines im Wesentlichen mengenmäßigen Ausgleichs von abgesaugter Abluft und zugeführter Zuluft gesteuert sein. Es ist möglich, dass mengen- und/oder strömungsmäßig ein leicht geringerer Zustrom an gereinigter Zuluft mittels der Luftzuführung 22 gegenüber der mittels der Luftabsaugung 16 abgesaugten Abluft herrscht. Beispielsweise kann so die Sogwirkung eines leichten Luftunterdrucks im Atembereich verbessert werden. Das mengenmäßig auszubalancierende Verhältnis der Zuluft zur Abluft kann je nach Bedarf der Luftströmungsstärke und Luftströmungsgeschwindigkeit variiert und sowohl manuell als auch automatisch mittels der Steuereinheit 20 einstellbar sein. Bevorzugt ist eine kontinuierlich wirkende Luftabsaugung, um die Eliminierung von Krankheitserregern garantieren zu können.

Es ist möglich, dass die Luftzuführung 22 eine weitere Reinigungseinrichtung 46 aufweist. Die weitere Reinigungseinrichtung 46 kann die Luft im Luftzuführkanal 38 zum Inaktivieren von Krankheitserregern reinigen, z. B. auf die gleiche Weise wie die Reinigungseinrichtung 30. Auch die weitere Reinigungseinrichtung 46 kann zum Anpassen einer Reinigungsleistung in Kommunikationsverbindung mit der Steuereinheit 20 sein. So kann beispielsweise die Reinigungsleistung (z. B. Bestrahlungsintensität und/oder Heizleistung) erhöht werden, wenn die Förderleistung der weiteren Fördereinrichtung 44 erhöht wird. Sofern die weitere Reinigungseinrichtung 46 eine Heizeinrichtung aufweist, kann es notwendig sein, die aufgeheizte Luft vor dem Einblasen in den Personenaufenthaltsbereich 10 auf eine gewünschte oder einatmungsfähige Temperatur abzukühlen, z. B. mit einem Luftkühler oder einer Abkühlstrecke.

Die Figur 2 zeigt eine Anwendung in einem Kraftfahrzeug, vorzugsweise Pkw oder Omnibus, wobei zur Verdeutlichung nicht alle Elemente der Vorrichtung zur Luftführung dargestellt sind. Im Kraftfahrzeug sind mehrere Personenaufenthaltsbereiche 10 umfasst, z. B. Fahrersitzplatz und Passagiersitzplätze. Jedem Personenaufenthaltsbereich 10 ist mindestens eine Luftabsaugung 16 zugeordnet, die aus einer Atemzone 34 des jeweiligen Personenaufenthaltsbereich 10 ausgeatmete Luft absaugt. Die Einlässe (in Figur 2 nicht gesondert mit Bezugszeichen versehen) der Luftabsaugungen 16 können für den Fahrersitzplatz beispielsweise in einem Armaturenbrett/einer fahrernahen Frontkonsole und/oder einem Deckenbereich des Kraftfahrzeugs angeordnet sein. Die Einlässe der Luftabsaugungen 16 für den Passagiersitzplatz können beispielsweise in einer Rückseite einer Rückenlehne eines Sitzplatzes und/oder einem Deckenbereich angeordnet sein.

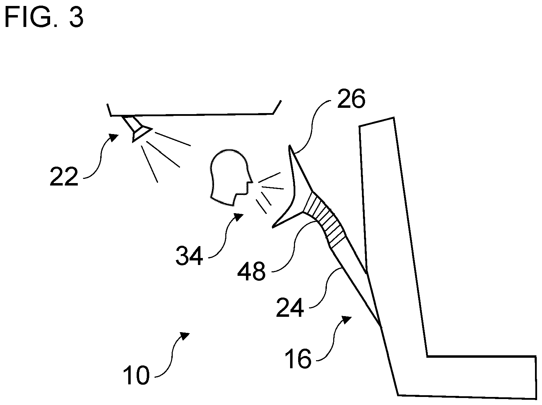

Die Figur 3 zeigt eine Ausführungsvariante für einen bewegbar angebrachten Einlass 26, wobei zur Verdeutlichung nicht alle Elemente der Vorrichtung zur Luftführung dargestellt sind.

Der Einlass 26 ist mit einem biegsamen (Rohr-)Abschnitt 48 des Luftabsaugkanals 24 verbunden, z. B. an einer Rückenlehne eines Fahrzeugsitzes. Der biegsame Abschnitt 48 kann in eine gewünschte Form gebogen werden, um den Einlass wie gewünscht an bzw. in der Atemzone 34 zu positionieren. Der biegsame Abschnitt 48 kann einer Veränderung einer Ausrichtung und/oder einer Position des Einlasses 26 ermöglichen. Vorzugsweise ist der biegsame Abschnitt 48 als ein Schwanenhals oder Flexarm ausgeführt.

Die Erfindung ist nicht auf die vorstehend beschriebenen bevorzugten Ausführungsbeispiele beschränkt. Vielmehr ist eine Vielzahl von Varianten und Abwandlungen im Rahmen des Schutzbereiches, der von den Ansprüchen festgelegt wird, möglich. Insbesondere beansprucht die Erfindung auch Schutz für den Gegenstand und die Merkmale der Unteransprüche. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Personenaufenthaltsbereich
- 12: Außenwand
- 14: Vorrichtung zur Luftreinigung
- 16: Luftabsaugung
- 18: Erfassungseinrichtung
- 20: Steuereinheit
- 21: Benutzerschnittstelle
- 22: Luftzuführung
- 24: Luftabsaugkanal
- 26: Einlass
- 27: Absaugelement
- 28: Fördereinrichtung
- 30: Reinigungseinrichtung
- 32: Auslass
- 34: Atemzone
- 36: Druckluftanlage
- 38: Luftzuführkanal
- 40: Einlass
- 42: Auslass
- 44: Weitere Fördereinrichtung
- 46: Weitere Reinigungseinrichtung
- 48: Biegsamer Abschnitt

## Patentansprüche

1. Vorrichtung (14) zur Luftreinigung für ein Personenbeförderungsmittel, aufweisend:
eine Erfassungseinrichtung (18), die dazu ausgebildet ist, eine Anwesenheit und/oder einen Gesundheitszustand einer Person in einem Personenaufenthaltsbereich (10) zu erfassen;
einen Luftabsaugkanal (24) mit:
- einem Einlass (26), der zum Absaugen von ausgeatmeter Luft aus einer Atemzone (34) des Personenaufenthaltsbereichs (10) anordenbar oder angeordnet ist;
- einer Fördereinrichtung (28) zum Fördern der Luft durch den Luftabsaugkanal (24);
- einer Reinigungseinrichtung (30) zum Inaktivieren von Krankheitserregern in der durch den Luftabsaugkanal (24) geförderten Luft; und
eine Steuereinheit (20), die dazu ausgebildet ist, die Fördereinrichtung (28) und/oder die Reinigungseinrichtung (30) in Abhängigkeit von einer Erfassung der Erfassungseinrichtung (18) zu betreiben;
wobei die Erfassungseinrichtung (18) dazu ausgebildet ist, eine Körpertemperatur der Person in dem Personenaufenthaltsbereich (10) zu erfassen, vorzugsweise mittels einer Wärmebildkamera und/oder einem berührungslosen Fieberthermometer; und
wobei die Steuereinheit (20) dazu ausgebildet ist, eine Förderleistung der Fördereinrichtung (28) und/oder eine Reinigungsleistung der Reinigungseinrichtung (30) zu erhöhen, wenn von der Erfassungseinrichtung (18) eine erhöhte Körpertemperatur, vorzugsweise ab ca. 37,5 °C, oder Fieber, vorzugsweise ab ca. 38,5 °C, erfasst wird.

2. Vorrichtung (14) zur Luftreinigung nach einem der vorherigen Ansprüche, wobei:
die Erfassungseinrichtung (18) dazu ausgebildet ist, eine Schallemission der Person in dem Personenaufenthaltsbereich (10) zu erfassen, vorzugsweise mittels eines Mikrofons.

3. Vorrichtung (14) zur Luftreinigung nach Anspruch 2, wobei:
die Steuereinheit (20) dazu ausgebildet ist, eine Förderleistung der Fördereinrichtung (28) und/oder eine Reinigungsleistung der Reinigungseinrichtung (30) zu erhöhen, wenn ein Husten, ein Schiefen und/oder ein Ächzen der Person mittels der Erfassungseinrichtung (18) erfasst wird.

4. Vorrichtung (14) zur Luftreinigung nach einem der vorherigen Ansprüche, wobei:
die Steuereinheit (20) dazu ausgebildet ist, die Fördereinrichtung (28) und/oder die Reinigungseinrichtung (30) zu aktivieren, wenn die Erfassungseinrichtung (18) die Anwesenheit der Person erfasst.

5. Vorrichtung (14) zur Luftreinigung nach einem der vorherigen Ansprüche, wobei:
die Steuereinheit (20) dazu ausgebildet ist, eine Förderleistung der Fördereinrichtung (28) und/oder eine Reinigungsleistung der Reinigungseinrichtung (30) temporär zu erhöhen, wenn die Erfassungseinrichtung (18) ein Verlassen des Personenaufenthaltsbereichs (10) durch die Person erfasst.

6. Vorrichtung (14) zur Luftreinigung nach einem der vorherigen Ansprüche, ferner aufweisend:
eine Benutzerschnittstelle (21), wobei mittels der Benutzerschnittstelle (21):
- eine Förderleistung der Fördereinrichtung (28) und/oder eine Reinigungsleistung der Reinigungseinrichtung (30) auf unterschiedliche Leistungsstufen anpassbar ist; und/oder
- eine Information bezüglich des erfassten Gesundheitszustands ausgebbar ist.

7. Vorrichtung (14) zur Luftreinigung nach einem der vorherigen Ansprüche, wobei:
der Einlass (26) bewegbar angebracht ist; und/oder
der Einlass (26) an einem biegsamen Abschnitt, vorzugsweise Schwanenhals oder Flexarm, des Luftabsaugkanals (24) angeordnet ist; und/oder
der Einlass (26) eine Trichterform aufweist; und/oder
der Einlass (26) an einer Decke, einer Wand, einem Tisch, einem Regal, einem Schrank, einer Konsole, einem Sitz oder einem Armaturenbrett angeordnet ist.

8. Vorrichtung (14) zur Luftreinigung nach einem der vorherigen Ansprüche, wobei:
der Luftabsaugkanal (24) ferner einen Auslass zum Ausgeben der geförderten Luft in eine Außenumgebung aufweist.

9. Vorrichtung (14) zur Luftreinigung nach einem der vorherigen Ansprüche, wobei:
die Fördereinrichtung (28) mittels einer Druckluftanlage (36) angetrieben ist, vorzugsweise nach dem Venturi-Prinzip.

10. Vorrichtung (14) zur Luftreinigung nach einem der vorherigen Ansprüche, wobei:
die Reinigungseinrichtung (30) eine UV-Behandlungseinrichtung zum Bestrahlen der geförderten Luft und/oder eine Heizeinrichtung zum Aufheizen der geförderten Luft, vorzugsweise auf mindestens 70°C, aufweist.

11. Vorrichtung (14) zur Luftreinigung nach einem der vorherigen Ansprüche, ferner aufweisend:
eine Luftzuführung (22), die zum Zuführen von Luft aus einer Außenumgebung in den Personenaufenthaltsbereich (10) anordenbar oder angeordnet ist, wobei die Luftzuführung (22) eine weitere Fördereinrichtung (44) zum Fördern von Luft aufweist; und
die Steuereinheit (20) dazu ausgebildet ist, einen Betrieb der weiteren Fördereinrichtung (44) an einen Betrieb der Fördereinrichtung (28) anzupassen, vorzugsweise miteinander zu synchronisieren.

12. Vorrichtung (14) zur Luftreinigung nach Anspruch 11, wobei:
die Luftzuführung (22) ferner eine weitere Reinigungseinrichtung (46) zum Inaktivieren von Krankheitserregern in der durch die weitere Fördereinrichtung (44) geförderten Luft, vorzugsweise mittels einer UV-Behandlungseinrichtung zum Bestrahlen der geförderten Luft und/oder einer Heizeinrichtung zum Aufheizen der geförderten Luft, besonders bevorzugt auf mindestens 70°, aufweist.

13. Personenbeförderungsmittel, vorzugsweise Fahrzeug, z. B. Kraftfahrzeug, Schienenfahrzeug, Luftfahrzeug oder Wasserfahrzeug, oder Personenaufzug, aufweisend:
mindestens einen Personenaufenthaltsbereich (10); und
mindestens eine Vorrichtung (14) nach einem der vorherigen Ansprüche, die dem mindestens einen Personenaufenthaltsbereich (10) zugeordnet ist.

## Claims

1. A device (14) for air purification for a passenger transportation means, comprising:
a detection device (18) configured to detect a presence and/or a state of health of a person in a person rest area (10);
an air extraction duct (24) having:
- an inlet (26) arrangeable or arranged for extracting exhaled air from a breathing zone (34) of the person rest area (10);
- a conveying device (28) for conveying the air through the air extraction duct (24);
- a purification device (30) for inactivating pathogens in the air conveyed through the air extraction duct (24); and
a control unit (20) configured to operate the conveying device (28) and/or the purification device (30) as a function of a detection of the detection device (18);
wherein the detection device (18) is configured to detect a body temperature of the person in the person rest area (10), preferably by means of a thermal imaging camera and/or a non-contact fever thermometer; and
wherein the control unit (20) is configured to increase a conveying capacity of the conveying device (28) and/or a cleaning capacity of the purification device (30) if an increased body temperature, preferably from about 37.5 °C, or fever, preferably from about 38.5 °C, is detected by the detection device (18).

2. The device (14) for air purification, according to one of the preceding claims, wherein:
the detection device (18) is configured to detect a sound emission of the person in the person rest area (10), preferably by means of a microphone.

3. The device (14) for air purification according to claim 2, wherein:
the control unit (20) is designed to increase a conveying capacity of the conveying device (28) and/or a cleaning capacity of the purification device (30) when a cough, a sniffle and/or a groan of the person is detected by means of the detection device (18).

4. The device (14) for air purification according to one of the preceding claims, wherein:
the control unit (20) is configured to activate the conveying device (28) and/or the purification device (30) when the detection device (18) detects the presence of the person.

5. The device (14) for air purification according to one of the preceding claims, wherein:
the control unit (20) is configured to temporarily increase a conveying capacity of the conveying device (28) and/or a cleaning capacity of the purification device (30) when the detection device (18) detects an exit of the person from the person rest area (10).

6. The device (14) for air purification according to one of the preceding claims, further comprising:
a user interface (21), wherein by means of the user interface (21):
- a conveying capacity of the conveying device (28) and/or a cleaning capacity of the purification device (30) is adaptable to different performance levels; and/or
- information relating to the detected state of health can be output.

7. The device (14) for air purification according to one of the preceding claims, wherein:
the inlet (26) is movably mounted; and/or
the inlet (26) is arranged on a flexible section, preferably gooseneck or flex arm, of the air extraction duct (24); and/or
the inlet (26) has a funnel shape; and/or
the inlet (26) is arranged on a ceiling, a wall, a table, a shelf, a cabinet, a console, a seat or a dashboard.

8. The device (14) for air purification according to one of the preceding claims, wherein: the air extraction duct (24) further comprises an outlet for discharging the conveyed air to an external environment.

9. The device (14) for air purification according to one of the preceding claims, wherein:
the conveying device (28) is driven by means of a compressed air system (36), preferably according to the Venturi principle.

10. The device (14) for air purification according to one of the preceding claims, wherein:
the purification device (30) comprises a UV treatment device for irradiating the conveyed air and/or a heating device for heating the conveyed air, preferably to at least 70°C.

11. The device (14) for air purification according to one of the preceding claims, further comprising:
an air supply (22) arrangeable or arranged for supplying air from an external environment into the person rest area (10), wherein the air supply (22) comprises a further conveying means (44) for conveying air; and
the control unit (20) is configured to adapt an operation of the further conveying device (44) to an operation of the conveying device (28), preferably to synchronize them with one another.

12. The device (14) for air purification according to claim 11, wherein:
the air supply (22) further comprises a further purification device (46) for inactivating pathogens in the air conveyed by the further conveying device (44), preferably by means of a UV treatment device for irradiating the conveyed air and/or a heating device for heating the conveyed air, particularly preferably to at least 70°.

13. A passenger transportation means, preferably a vehicle, e.g. a motor vehicle, rail vehicle, aircraft or watercraft, or a passenger elevator, comprising
at least one person rest area (10); and
at least one device (14) according to one of the preceding claims, which is associated with the at least one person rest area (10).

## Revendications

1. Dispositif (14) de purification d'air pour un moyen de transport de personnes, présentant :
un dispositif de détection (18) qui est réalisé pour détecter une présence et/ou un état de santé d'une personne dans une zone de séjour de personnes (10) ;
un conduit d'aspiration d'air (24), comprenant :
- une entrée (26) qui peut être agencée ou est agencée pour aspirer l'air expiré d'une zone de respiration (34) de la zone de séjour de personnes (10) ;
- un dispositif d'acheminement (28) pour acheminer l'air à travers le conduit d'aspiration d'air (24) ;
- un dispositif de purification (30) pour inactiver des agents pathogènes dans l'air acheminé à travers le conduit d'aspiration d'air (24) ; et
une unité de commande (20) qui est réalisée pour faire fonctionner le dispositif d'acheminement (28) et/ou le dispositif de purification (30) en fonction d'une détection du dispositif de détection (18) ;
dans lequel le dispositif de détection (18) est réalisé pour détecter une température corporelle de la personne dans la zone de séjour de personnes (10), de préférence au moyen d'une caméra infrarouge et/ou d'un thermomètre médical sans contact ; et
dans lequel l'unité de commande (20) est réalisée pour augmenter une puissance d'acheminement du dispositif d'acheminement (28) et/ou une puissance de purification du dispositif de purification (30) si le dispositif de détection (18) détecte une température corporelle élevée, de préférence à partir d'environ 37,5 °C, ou de la fièvre, de préférence à partir d'environ 38,5 °C.

2. Dispositif (14) de purification d'air selon l'une quelconque des revendications précédentes, dans lequel : le dispositif de détection (18) est réalisé pour détecter une émission sonore de la personne dans la zone de séjour de personnes (10), de préférence au moyen d'un microphone.

3. Dispositif (14) de purification d'air selon la revendication 2, dans lequel :
l'unité de commande (20) est réalisée pour augmenter une puissance d'acheminement du dispositif d'acheminement (28) et/ou une puissance de purification du dispositif de purification (30) lorsqu'une toux, un reniflement et/ou un gémissement de la personne sont détectés au moyen du dispositif de détection (18).

4. Dispositif (14) de purification d'air selon l'une quelconque des revendications précédentes, dans lequel : l'unité de commande (20) est réalisée pour activer le dispositif d'acheminement (28) et/ou le dispositif de purification (30) si le dispositif de détection (18) détecte la présence de la personne.

5. Dispositif (14) de purification d'air selon l'une quelconque des revendications précédentes, dans lequel : l'unité de commande (20) est réalisée pour augmenter temporairement une puissance d'acheminement du dispositif d'acheminement (28) et/ou une puissance de purification du dispositif de purification (30) si le dispositif de détection (18) détecte que la personne quitte la zone de séjour de personnes (10).

6. Dispositif (14) de purification d'air selon l'une quelconque des revendications précédentes, présentant en outre :
une interface utilisateur (21), dans lequel au moyen de l'interface utilisateur (21) :
- la puissance d'acheminement du dispositif d'acheminement (28) et/ou une puissance de purification du dispositif de purification (30) peuvent être adaptées à différents niveaux de puissance ; et/ou
- une information concernant l'état de santé détecté peut être émise.

7. Dispositif (14) de purification d'air selon l'une quelconque des revendications précédentes, dans lequel : l'entrée (26) est installée de manière mobile ; et/ou l'entrée (26) est disposée dans une partie flexible, de préférence un col de cygne ou un bras flexible, du conduit d'aspiration d'air (24) ; et/ou
l'entrée (26) présente une forme d'entonnoir ; et/ou l'entrée (26) est disposée au niveau d'un plafond, d'une paroi, d'une table, d'une étagère, d'une armoire, d'une console, d'un siège ou d'un tableau de bord.

8. Dispositif (14) de purification d'air selon l'une quelconque des revendications précédentes, dans lequel : le conduit d'aspiration d'air (24) présente en outre une sortie pour sortir l'air acheminé vers un environnement extérieur.

9. Dispositif (14) de purification d'air selon l'une quelconque des revendications précédentes, dans lequel : le dispositif d'acheminement (28) est entraîné par un système d'air comprimé (36), de préférence selon le principe Venturi.

10. Dispositif (14) de purification d'air selon l'une quelconque des revendications précédentes, dans lequel : le dispositif de purification (30) présente un dispositif de traitement aux UV pour irradier l'air acheminé et/ou un dispositif de chauffage pour chauffer l'air acheminé, de préférence à au moins 70 °C.

11. Dispositif (14) de purification d'air selon l'une quelconque des revendications précédentes, présentant en outre :
une arrivée d'air (22) qui peut être disposée ou est disposée pour amener l'air d'un environnement extérieur dans la zone de séjour de personnes (10), dans lequel l'arrivée d'air (22) présente un dispositif d'acheminement supplémentaire (44) pour acheminer l'air ; et
l'unité de commande (20) est réalisée pour adapter un fonctionnement du dispositif d'acheminement supplémentaire (44) au fonctionnement du dispositif d'acheminement (28), de préférence pour les synchroniser l'un par rapport à l'autre.

12. Dispositif (14) de purification d'air selon la revendication 11, dans lequel :
l'arrivée d'air (22) présente en outre un dispositif de purification supplémentaire (46) pour inactiver des agents pathogènes dans l'air acheminé par le dispositif d'acheminement supplémentaire (44), de préférence au moyen d'un dispositif de traitement aux UV pour irradier l'air acheminé et/ou d'un dispositif de chauffage pour chauffer l'air acheminé, en particulier à au moins 70°.

13. Moyen de transport de personnes, de préférence véhicule, par exemple véhicule automobile, véhicule ferroviaire, aéronef ou navire, ou ascenseur pour personnes, présentant :
au moins une zone de séjour de personnes (10) ; et
au moins un dispositif (14) selon l'une quelconque des revendications précédentes qui est associé à ladite au moins une zone de séjour de personnes (10).
